# EUROPEAN PATENT SPECIFICATION

(11) **EP 1 079 585 B1**
(45) Date of publication and mention of the grant of the patent: **10.11.2004**
(21) Application number: 99440179.2
(22) Date of filing: 02.07.1999
(51) Int. Cl.: H04M 1/57

(54) **Telecommunication system and method of handling caller identification**
Telekommunikationssystem und Verfahren zur Verarbeitung der Anruferidentifizierung
Système de télécommunication et méthode de traitement de l'identification de l'appelant

(43) Date of publication of application: 28.02.2001
(73) Proprietor: ALCATEL, 75008 Paris (FR)
(72) Inventor: Rinie, Hubert, 67240 Gries (FR); Genin, Philippe, 67114 Eschau (FR); Glesser, Philippe, 67240 Oberhofen sur Moder (FR)
(74) Representative: van Bommel, Jan Peter

(56) References cited:
- EP-A- 0 823 807
- WO-A-96/14702
- US-A- 5 351 289
- US-A- 5 377 260
- US-A- 5 535 265
- US-A- 5 907 605

## Description

The invention relates to a telecommunication system consisting of at least a terminal and a modem coupled to an analog line, which telecommunication system comprises
- a receiver for receiving a caller identification signal via said analog line,
- a memory for storing a code definition signal defining at least part of said caller identification signal.

Such a telecommunication system is known in the form of an analog telephone like described in EP 97401075.3 published as EP 878943. This analog telephone comprises a modem (13) which in general is provided with said receiver and said memory.

Such a telecommunication system is disadvantageous, inter alia, due to needing to be adapted for each different standard (with each different standard requiring a new definition of said caller identification signal). For caller identification signals, many different standards exist (ETSI, UK-BT, UK-cable, US).

It is an object of the invention, inter alia, to provide a telecommunication system as described in the preamble, which can handle different standards, without extensive adaptation being necessary.

Thereto, the telecommunication system according to the invention is characterised in that said memory comprises a further code definition signal, at least one of said code definition signals being selectable in response to a selection mechanism.

By storing different code definition signals, the telecommunication system according to the invention can handle different caller identification signals according to different standards, whereby in dependence of which standard is used one of the code definition signals has to be selected by said selection mechanism.

The invention is based on the insight, inter alia, that all different code definition signals can be stored beforehand, after which a selection is all there is left to be done.

The invention solves the problem, inter alia, of providing a telecommunication system which can handle different standards, without extensive adaptation being necessary.

At least part of the inventivity of this invention is situated in realising that extensive adaptation is necessary to adapt a telecommunication system to a different standard.

A first embodiment of the telecommunication system according to the invention is characterised in that said selection mechanism forms part of software to be stored into said telecommunication system.

In this case specific software is stored for a specific standard, in other words for example said selection mechanism forms part of specific software, whereby said code definition signals form part of general software used for all standards.

A second embodiment of the telecommunication system according to the invention is characterised in that said telecommunication system comprises
- a detector for detecting an incoming signal arriving via said analog line,
- a processor for performing said selection mechanism in response to said detecting.

By providing said telecommunication system with said detector and said processor, said selecting could for example be done in two steps, a first step for selecting and a second step for triggering, whereby said first step could be realised due to for example said selection mechanism forming part of said software or due to for example said selection mechanism being supplied to said system after said software being installed, and whereby said second step (for example the loading of said selection mechanism into a working memory of a processor) could be realised in response to said detecting of said incoming signal which for example is in the form of a ringing signal. According to a more future alternative, even automatic adaptation to a standard could become possible by sending a more particular incoming signal to said telecommunication system and in response making said selection.

A third embodiment of the system according to the invention is characterised in that said selection mechanism is received via said analog line by said receiver.

By sending said selection mechanism to said telecommunication system a more efficient automatic adaptation becomes possible.

A fourth embodiment of the system according the invention is characterised in that said at least one code definition signal is also received via said analog line by said receiver.

In this case a code definition signal is downloaded from a network into said telecommunication system.

A fifth embodiment of the system according the invention is characterised in that caller identification signals are used in an on-hook situation (CID or Caller ID).

A sixth embodiment of the system according the invention is characterised in that caller identification signals are used in an off-hook situation (CIDCW or Caller ID Call Waiting).

The invention further relates to a terminal to be coupled to an analog line, which terminal comprises
- a receiver for receiving a caller identification signal via said analog line,
- a memory for storing a code definition signal defining at least part of said caller identification signal.

The terminal according to the invention is characterised in that said memory comprises a further code definition signal, at least one of said code definition signals being selectable in response to a selection mechanism.

The invention yet further relates to a modem to be coupled to an analog line, which modem comprises
- a receiver for receiving a caller identification signal via said analog line,
- a memory for storing a code definition signal defining at least part of said caller identification signal.

The modem according to the invention is characterised in that said memory comprises a further code definition signal, at least one of said code definition signals being selectable in response to a selection mechanism.

The invention also relates to a method for preparing a telecommunication system consisting of at least a terminal and a modem coupled to an analog line for dealing with at least one out of a collection of several caller identification signals according to different standards, which telecommunication system comprises
- a receiver for receiving a caller identification signal via said analog line,
- a memory for storing a code definition signal defining at least part of said caller identification signal.

The method according to the invention is characterised in that said method comprises the steps of
- storing at least two code definition signals,
- selecting at least one of said code definition signals in response to a selection mechanism.

US 5,907,605 describes a caller ID equipment for both FSK and DTMF caller ID formats. It comprises a poll polarity inversion detector, a off-hook detector, a ring detector having an FSK Demodulator, a DTMF decoder, a processor and LCD display. A memory is provided for storing received telephone numbers.

The documents EP 746128, WO 85/00488, FR 2727271 and GB 2279203 all disclose systems related to caller identification signals, neither one of these documents nor EP 878943 discloses the telecommunication system according to the invention. All references including further references cited with respect to and/or inside said references are considered to be incorporated in this patent application.

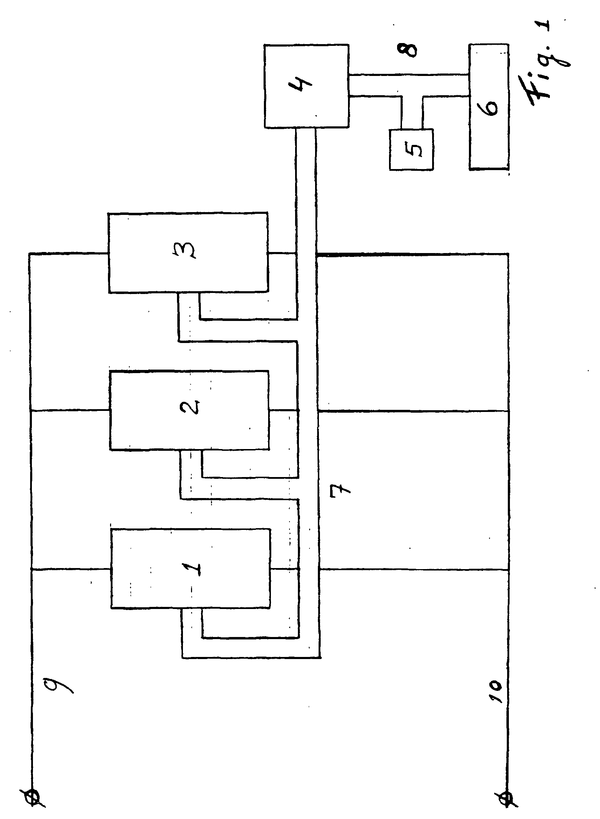

The invention will be further explained at the hand of an embodiment described with respect to a drawing, whereby
figure 1 discloses a telecommunication system according to the invention comprising a terminal and/or a modem.

The telecommunication system shown in figure 1 comprises a telephony circuit 1 (consisting of an AC/DC-impedance circuit, a dialler, a line attachment etc.) coupled to connection 9 (which is coupled to a first termination) and to connection 10 (which is coupled to a second termination) and to a bus 7, and comprises a detection circuit 2 coupled to connection 9 and to connection 10 and to bus 7, and comprises a modem 3 coupled to connection 9 and to connection 10 and to bus 7, with said modem 3 comprising a first hardware part and a second software part, and comprises a processor 4 coupled to bus 7, which processor 4 is coupled to a bus 8 which is coupled to an input/output circuit 5 (keyboard, display, smart card) and to a memory 6.

The telecommunication system according to the invention comprising terminal 1,2,7 (and possibly 4,5,6,8) and modem 3 (and possibly 4,5,6,8) functions as follows.

According to a first embodiment, in an on-hook situation, a ringing signal arrives, together with a caller identification signal. Memory 6 comprises for example twenty code definition signals defining twenty caller identification signals (for example two caller identification signals possible for each of ten different countries). These twenty code definition signals for example have been stored in the past during manufacturing of the system or have been stored in the past after manufacturing by using for example a smart card and smart card reader forming part of input/output circuit 5. Also in the past, in dependence of which kind of caller identification signals are going to be used in which kind of country, a selection mechanism has been stored, for example during manufacturing in case of sufficient information already being available (which caller identification signals for which country need to be recognised) or after manufacturing in case of for example said system being in a shop and waiting to be sold or already being (partly) installed in a home. Said selection mechanism for example has been generated by using said keyboard and/or a smart card and smart card reader forming part of input/output circuit. Then, in case of said arriving caller identification signal, this selection mechanism is used for defining how said caller identification signal is to be looked at.

According to a first alternative to said first embodiment, said ringing signal and/or said caller identification signal comprise(s) (each time or only once, for example the first time, or only when necessary, for example in case amendments are necessary) an incoming signal, which then for example is detected by detection circuit 2, in response to which signals flow via bus 7 to processor 4. Then, in case of said arriving caller identification signal, the selection mechanism is consulted for defining how said caller identification signal is to be looked at.

According to a second alternative to said first embodiment, said ringing signal and/or said caller identification signal comprise(s) said incoming signal, which then for example is detected by modem 3, in response to which signals flow via bus 7 to processor 4. Then, in case of said arriving caller identification signal, the selection mechanims is consulted for defining how said caller identification signal is to be looked at.

According to a third alternative to said first embodiment, said ringing signal and/or said caller identification signal comprise(s) (for example only once, for example the first time, or only when necessary, for example in case amendments are necessary) said selection mechanism, which then for example is detected by detection circuit 2 and/or by modem 3, in response to which signals flow via bus 7 to processor 4, which via bus 8 controls memory 6 in such a way that said selection mechanism is stored. Then, in case of said arriving caller identification signal, the selection mechanism stored is consulted for defining how said caller identification signal is to be looked at.

According to a fourth alternative to said first embodiment, said ringing signal and/or said caller identification signal comprise(s) (only once, for example the first time, or only when necessary, for example in case amendments are necessary) at least one new code definition signal, which then for example is detected by detection circuit 2 and/or by modem 3, in response to which said at least one new code definition signal flows via bus 7 to processor 4, which stores said at least one new code definition signal via bus 8 into memory 6, in addition to the twenty already stored and/or replacing at least one of the twenty already stored.

According to a second embodiment, in an off-hook situation, a call is going on (speech, data, etc.), when a further caller identification signal related to a further call arrives (CIDCW or Caller ID Call Waiting). Memory 6 comprises for example twenty code definition signals defining twenty caller identification signals (for example two caller identification signals possible for each of ten different countries). These twenty code definition signals for example have been stored in the past during manufacturing of the system or have been stored in the past after manufacturing by using for example a smart card and smart card reader forming part of input/output circuit 5. Also in the past, in dependence of which kind of caller identification signals are going to be used in which kind of country, a selection mechanism has been stored, for example during manufacturing in case of sufficient information already being available (which caller identification signals for which country need to be recognised) or after manufacturing in case of for example said system being in a shop and waiting to be sold or already being (partly) installed in a home. Said selection mechanism for example has been generated by using said keyboard and/or a smart card and smart card reader forming part of input/output circuit. Then, in case of said arriving further caller identification signal, the selection mechanism is consulted for defining how said further caller identification signal is to be looked at.

According to a first alternative to said second embodiment, said further caller identification signal comprise(s) (each time or only once, for example the first time, or only when necessary, for example in case amendments are necessary) an incoming signal, which then for example is detected by detection circuit 2, in response to which signals flow via bus 7 to processor 4. Then, in case of said arriving further caller identification signal, the selection mechanism is consulted for defining how said further caller identification signal is to be looked at.

According to a second alternative to said second embodiment, said further caller identification signal comprise(s) said incoming signal, which then for example is detected by modem 3, in response to which signals flow via bus 7 to processor 4. Then, in case of said arriving further caller identification signal, the selection mechanism is consulted for defining how said further caller identification signal is to be looked at.

According to a third alternative to said second embodiment, said further caller identification signal comprise(s) (for example only once, for example the first time, or only when necessary, for example in case amendments are necessary) said selection mechanism, which then for example is detected by detection circuit 2 and/or by modem 3, in response to which signals flow via bus 7 to processor 4, which via bus 8 controls memory 6 in such a way that said selection mechanism is stored. Then, in case of said arriving further caller identification signal, the selection mechanism is consulted for defining how said further caller identification signal is to be looked at.

According to a fourth alternative to said second embodiment, said further caller identification signal comprise(s) (only once, for example the first time, or only when necessary, for example in case amendments are necessary) at least one new code definition signal, which then for example is detected by detection circuit 2 and/or by modem 3, in response to which said at least one new code definition signal flows via bus 7 to processor 4, which stores said at least one new code definition signal via bus 8 into memory 6, in addition to the twenty already stored and/or replacing at least one of the twenty already stored.

According to a third embodiment, a state machine is used: For Caller ID in an on-hook situation, any input signal can be detected (this input signal can be ringing, line polarity inversion, etc.), the table being in a first state describes the corresponding signal(s) or the corresponding signal sequence(s), as soon as a valid signal has been detected, the state machine automatically performs some actions like switching DC and/or AC impedance, again, the table describes the action(s) or the action sequence(s), when this(these) action(s) has(have) been done, the state machine goes into a next state where it waits for Caller ID message reception from the line (modulated information), again the description of this message is given by the table, as soon as said message has been received, the action is completed (DC or AC switching) and the state machine goes again in the first state. In this case the advantage of the invention is that configuration through tables in the memory is possible, with respect to all different types of signals and sequences of signals, as well as all actions and sequences of actions. For CIDCW in an off-hook situation: The mechanism is based on the same strategy as described above, but the action(s) and/or action sequence(s) are different, and the kind of signals to be received and generated are different.

All embodiments are just embodiments and do not exclude other embodiments not shown and/or described. All alternatives are just alternatives and do not exclude other alternatives not shown and/or described. For example, two or more units of circuits 1, 2 and 5 and modem 3 and processor 4 and memory 6 could be partly or entirely combined into a new unit, and/or each unit could be divided into two or more subunits. Of course, functions of said hardware part of modem 3 could be shifted into ist software part, and vice versa, thereby using less hardware and creating more software, and vice versa. Further, functions of said software part could be shifted into processor 4. According to a first very efficient embodiment said hardware part will be of minimal configuration and said software part will be completely integrated with processor 4. According to a second very efficient embodiment circuit 2 and said hardware part are combined into one new unit, whereby said software part could be again completely integrated with processor 4.

So the telecommunication system shown in figure 1 and consisting of at least said terminal (1,2,7) (and possibly 4,5,6,8) and said modem (3) (and possibly 4,5,6,8) comprises
- a receiver (1 and/or 2 and/or 3 and/or 4) for receiving said caller identification signal via said analog line,
- a memory (6 and/or a part of at least one of 1 and/or 2 and/or 3 and/or 4) for storing said code definition signal defining at least part of said caller identification signal,
and is characterised in that said memory comprises said further code definition signal, at least one of said code definition signals being selectable in response to said selection mechanism.

Said telecommunication system preferably comprises
- a detector (1 and/or 2 and/or 3 and/or 4) for detecting said incoming signal arriving via said analog line,
- said processor (4) for performing said selection mechanism in response to said detecting.

A terminal according to the invention and a modem according to the invention each may comprise said receiver and/or said memory.

## Claims

1. Telecommunication system consisting of at least a terminal (1, 2, 7) and a modem (3) coupled to an analog line, which telecommunication system comprises
- a receiver for receiving a caller identification signal via said analog line,
- a memory (6) for storing a code definition signal defining at least part of said caller identification signal,
**characterised in that** said memory (6) comprises a further code definition signal, at least one of said code definition signals being selectable in response to a selection mechanism.

2. Telecommunication system according to claim 1, **characterised in that** said selection mechanism forms part of software to be stored into said telecommunication system.

3. Telecommunication system according to claim 1 or 2, **characterised in that** said telecommunication system comprises
- a detector for detecting an incoming signal arriving via said analog line,
- a processor (4) for performing said selection mechanism in response to said detecting.

4. Telecommunication system according to claim 1, 2 or 3, **characterised in that** said selection mechanism is received via said analog line by said receiver.

5. Telecommunication system according to claim 1, 2, 3 or4,
**characterised in that** said at least one code definition signal is also received via said analog line by said receiver.

6. Telecommunication system according to any one of claims 1 to 5,
**characterised in that** caller identification signals are used in an on-hook situation (CID or Caller ID).

7. Telecommunication system according to any one of claims 1 to 6,
**characterised in that** caller identification signals are used in an off-hook situation (CIDCW or Caller ID Call Waiting).

8. Method for preparing a telecommunication system consisting of at least a terminal (1, 2, 7) and a modem (3) coupled to an analog line for dealing with at least one out of a collection of several caller identification signals according to different standards, which telecommunication system comprises
- a receiver for receiving a caller identification signal via said analog line,
- a memory (6) for storing a code definition signal defining at least part of said caller identification signal,
**characterised in that** said method comprises the steps of
- storing at least two code definition signals,
- selecting at least one of said code definition signals in response to a selection mechanism.

## Patentansprüche

1. Telekommunikationssystem, das aus mindestens einem Endgerät (1, 2, 7) und einem Modem (3) besteht, das an eine Analogleitung angeschlossen ist, wobei das Telekommunikationssystem Folgendes umfasst:
- Einen Empfänger zum Empfang des Anruferidentifizierungssignals über die Analogleitung,
- Einen Speicher (6) zur Speicherung eines Code-Definitions-Signals, das mindestens einen Teil des Anruferidentifizierungssignals definiert,
**dadurch gekennzeichnet, dass** der Speicher (6) ein weiteres Code-Definitions-Signal enthält, wobei mindestens eines der Code-Definitions-Signale als Reaktion auf einen Auswahlmechanismus ausgewählt werden kann.

2. Telekommunikationssystem gemäß Anspruch 1, **dadurch gekennzeichnet, dass** der Auswahlmechanismus einen Teil der Software bildet, die in dem Telekommunikationssystem zu speichern ist.

3. Telekommunikationssystem gemäß Anspruch 1 oder 2, **dadurch gekennzeichnet, dass** das Telekommunikationssystem Folgendes umfasst:
- Einen Detektor zum Erkennen eines ankommenden Signals, das über die Analogleitung eintrifft,
- Einen Prozessor (4) zur Durchführung des Auswahlmechanismus als Reaktion auf die Erkennung.

4. Telekommunikationssystem gemäß Anspruch 1, 2 oder 3, **dadurch gekennzeichnet, dass** der Auswahlmechanismus über die Analogleitung von dem Empfänger empfangen wird.

5. Telekommunikationssystem gemäß Anspruch 1, 2, 3 oder 4, **dadurch gekennzeichnet, dass** mindestens ein Code-Definitions-Signal ebenfalls über die Analogleitung von dem Empfänger empfangen wird.

6. Telekommunikationssystem gemäß einem beliebigen der Ansprüche 1 bis 5, **dadurch gekennzeichnet, dass** Anruferidentifizierungssignale bei aufgelegtem Hörer verwendet werden (CID oder Anruferkennung).

7. Telekommunikationssystem gemäß einem beliebigen der Ansprüche 1 bis 6, **dadurch gekennzeichnet, dass** Anruferidentifizierungssignale bei abgenommenem Hörer verwendet werden (CIDCW oder Anruferkennung bei wartendem Anruf).

8. Verfahren zur Bereitstellung eines Telekommunikationssystems, das aus mindestens einem Endgerät (1, 2, 7) und einem Modem (3) besteht, das an eine Analogleitung gekoppelt ist, um mindestens eines aus einer Sammlung von Anruferidentifizierungssignalen gemäß unterschiedlicher Standards zu bearbeiten, wobei das Telekommunikationssystem Folgendes umfasst:
- Einen Empfänger zum Empfang des Anruferidentifizierungssignals über die Analogleitung,
- Einen Speicher (6) zur Speicherung eines Code-Definitions-Signals, das mindestens einen Teil des Anruferidentifizierungssignals definiert,
**dadurch gekennzeichnet, dass** das Verfahren folgende Schritte umfasst:
- Speichern von mindestens zwei Code-Definitions-Signalen,
- Auswahl mindestens eines der Code-Definitions-Signale als Reaktion auf den Auswahlmechanismus.

## Revendications

1. Système de télécommunications constitué d'au moins un terminal (1, 2, 7) et d'un modem (3) relié à une ligne analogique, lequel système de télécommunications comprend :
- un récepteur pour recevoir ledit signal d'identification de l'appelant par l'intermédiaire de la ligne analogique,
- une mémoire (6) pour stocker un signal de définition du code définissant au moins une partie dudit signal d'identification de l'appelant,
**caractérisé en ce que** ladite mémoire (6) comprend un autre signal de définition du code, au moins un desdits signaux de définition du code pouvant être sélectionné en réponse à un mécanisme de sélection.

2. Système de télécommunications selon la revendication 1, **caractérisé en ce que** ledit mécanisme de sélection constitue une partie de logiciel à stocker dans ledit système de télécommunications.

3. Système de télécommunications selon la revendication 1 ou 2, **caractérisé en ce que** ledit système de télécommunications comprend :
- un détecteur pour détecter un signal entrant arrivant par l'intermédiaire de ladite ligne analogique,
- ledit processeur (4) pour réaliser ledit mécanisme de sélection en réponse à ladite détection.

4. Système de télécommunications selon la revendication 1, 2 ou 3, **caractérisé en ce que** ledit mécanisme de sélection est reçu par l'intermédiaire de ladite ligne analogique par ledit récepteur.

5. Système de télécommunications selon la revendication 1, 2, 3 ou 4, **caractérisé en ce que** ledit signal de définition du code est également reçu par l'intermédiaire de ladite ligne analogique par ledit récepteur.

6. Système de télécommunications selon l'une des revendications 1 à 5, **caractérisé en ce que** les signaux d'identification de l'appelant sont utilisés dans une situation de raccrochage (CID ou identification de l'appelant).

7. Système de télécommunications selon l'une des revendications 1 à 6, **caractérisé en ce que** les signaux d'identification de l'appelant sont utilisés dans une situation de décrochage (CIDCW ou attente d'appel d'identification de l'appelant).

8. Procédé pour préparer un système de télécommunications constitué d'au moins un terminal (1, 2, 7) et d'un modem (3) relié à une ligne analogique pour traiter au moins un signal d'un ensemble de signaux d'identification de l'appelant selon différents standards, lequel système de télécommunications comprend :
- un récepteur pour recevoir ledit signal d'identification de l'appelant par l'intermédiaire de la ligne analogique,
- une mémoire (6) pour stocker un signal de définition du code définissant au moins une partie dudit signal d'identification de l'appelant,
**caractérisé en ce que** ledit procédé comprend les étapes suivantes :
- stockage d'au moins deux signaux de définition du code,
- sélection d'au moins un desdits signaux de définition du code en réponse à un mécanisme de sélection.
